Europäisches Patentamt

European Patent Office

Office européen des brevets

(11) Veröffentlichungsnummer : **0 106 950**
**B1**

(12) **EUROPÄISCHE PATENTSCHRIFT**

(45) Veröffentlichungstag der Patentschrift :
25.03.87

(21) Anmeldenummer : 83107393.7

(22) Anmeldetag : 27.07.83

(51) Int. Cl.⁴ : **F 01 M   9/10**, F 16 N 39/04,
   F 02 M 63/00

(54) **Hubkolbenbrennkraftmaschine.**

(30) Priorität : 01.10.82 DE 3236404

(43) Veröffentlichungstag der Anmeldung :
02.05.84 Patentblatt 84/18

(45) Bekanntmachung des Hinweises auf die Patenterteilung : 25.03.87 Patentblatt 87/13

(84) Benannte Vertragsstaaten :
AT DE FR GB IT SE

(56) Entgegenhaltungen :
BE-A-   359 224
DD-B-    39 916
DE-B- 1 249 012
DE-C-   665 079
DE-C-   955 100
GB-A-   201 353
GB-A-   363 852
GB-A- 2 039 608
US-A- 1 721 525
US-A- 2 641 241

(73) Patentinhaber : Klöckner-Humboldt-Deutz Aktiengesellschaft
Deutz-Mülheimer-Strasse 111 Postfach 80 05 09
D-5000 Köln 80 (DE)

(72) Erfinder : Küpper, Heinz
Am Driesch 6
D-5210 Troisdorf-Sieglar (DE)

## Beschreibung

Die Erfindung bezieht sich auf eine Hubkolbenbrennkraftmaschine mit einer Ansaugluftführung und einer Abgasführung und mit einer zumindest eine Einspritzpumpe und eine Einspritzdüse aufweisenden Brennstoffeinspritzvorrichtung, wobei zur Schmierung der Einspritzpumpe der Brennkraftmaschine Schmieröl entnehmbar und über einen Schmierölrücklauf in das Schmierölsystem der Brennkraftmaschine rückführbar ist.

Derart gattungsgemäße Hubkolbenbrennkraftmaschinen sind allgemein bekannt und z. B. in der DE-B-1 249 012 beschrieben. Sie werden meist nach konventioneller Art mit Dieselbrennstoff betrieben. Wegen der in zunehmenden Maße zu erwartenden Ölverknappung und Ölverteuerung kommen jedoch synthetisch herstellbaren und anderen alternativen Brennstoffen im Brennkraftmaschinenbetrieb immer größere Bedeutung zu, die daneben auch noch den Vorteil einer erheblich verbesserten Abgasqualität im Gegensatz zu mit Dieselbrennstoff betriebenen Brennkraftmaschinen bieten. Synthetisch herstellbare oder andere alternative Brennstoffe, insbesondere niedrig siedende Alkohole wie beispielsweise Methanol, sind auf verschiedene Weise durchaus zufriedenstellend in Hubkolbenbrennkraftmaschinen konventioneller bzw. gattungsgemäßer Bauart einsetzbar. So ist z. B. vorgeschlagen worden, Methanol über die konventionelle Einspritzvorrichtung und über eine zusätzliche Einspritzvorrichtung Zündgasöl einzuspritzen (DE-A-2 901 210) oder einen besonderen Zünd- oder Glühkörper an der Brennkraftmaschine vorzusehen und Methanol ebenfalls über die konventionelle Einspritzvorrichtung einzuspritzen (DD-C-39 916).

Derartigen Hubkolbenbrennkraftmaschinen haftet jedoch bei Betrieb mit niedrig siedenden Brennstoffen der gemeinsame Nachteil an, daß die Einspritzpumpe zum Einspritzen des niedrig siedenden Brennstoffes zur Schmierung an das Schmierölsystem der Brennkraftmaschine angeschlossen ist und somit aufgrund unvermeidbarer Leckagen am Einspritzpumpenelement niedrig siedender Brennstoff in das Schmierölsystem der Brennkraftmaschine gelangt, der infolge der dort herrschenden Temperaturen verdampft und insbesondere im Kurbelgehäuse der Brennkraftmaschine mit der dort vorhandenen Luft ein zündfähiges Gemisch bildet. Hierdurch ist die Gefahr von Kurbelgehäuseexplosionen gegeben.

Um dies zu vermeiden, ist aus der GB-A-201 353 eine Verdampfungsvorrichtung bekannt, die an der Abgasführung thermisch angekoppelt ist und einen Verdampferraum aufweist, in den ein Zu- und Abfluß für das Motorschmieröl sowie eine Ausgangsleitung für die verdampften Stoffe mündet. Der Verdampferraum ist dabei mit der Abgasführung über einen mit einem Drosselventil gesteuerten offenen Luftraum verbunden.

Nachteilig bei dem offenen Luftraum aus der britischen Druckschrift ist, daß die Drosselklappe bei hohen Temperaturen des Abgases in der Abgasführung, d. h. bei hohen Drehzahlen der Brennkraftmaschine, geschlossen werden muß, da sonst das Schmieröl im Verdampferraum zu heiß wird und verbrennt. Bei niedrigen Drehzahlen der Brennkraftmaschine, d. h. bei niedrigen Temperaturen der Abgase muß die Drosselklappe demgegenüber wieder geöffnet werden. Es ist demnach eine stetige Steuerung der Drosselklappe nötig.

Aufgabe dieser Erfindung ist es, eine Verdampfungsvorrichtung zu schaffen, welche im Verdampferaum eine von der augenblicklichen Drehzahl der Brennkraftmaschine weitgehend unabhängige Temperatur aufweist.

Erfindungsgemäß wird dies durch eine Verdampfungsvorrichtung gelöst, die eingangsseitig mit dem Schmierölrücklauf der Einspritzpumpe und ausgangsseitig mit dem Schmierölsystem der Brennkraftmaschine und der Ansaugluftführung verbunden ist, wobei die Verdampfungsvorrichtung an der Abgasführung thermisch angekoppelt ist und einen Verdampferraum aufweist, in den ein Zu- und Abfluß für das Motorschmieröl sowie eine Ausgangsleitung für die verdampften Stoffe mündet, wobei der Verdampferraum durch einen geschlossenen Luftraum von der Abgasführung getrennt ist.

Der geschlossene Luftraum führt zu einer Temperaturvergleichmäßigung im Verdampferaum, so daß sich eine von der augenblicklichen Drehzahl der Brennkraftmaschine unabhängige Temperatur im Verdampferaum einstellt. Die Dimensionierung des Luftraumes ist dabei so gewählt, daß diese mittlere Temperatur den gewünschten Wert aufweist, das heißt zum Beispiel über der Siedetemperatur des Methanols liegt.

Vorteilhafterweise sind die Abgasführung und die Verdampfungsvorrichtung einstückig ausgebildet. Dadurch ist eine sehr kompakte Baueinheit der Verdampfungsvorrichtung erzielt, die gerade bei modernen Brennkraftmaschinen mit ihrem raumsparenden Aufbau bedeutende Vorteile bietet.

Es ist von Vorteil, wenn der Verdampferaum und der Luftraum zylinderförmig ausgebildet sind und denselben Durchmesser aufweisen wie die Abgasführung.

In weiterer Ausgestaltung der Erfindung wird vorgeschlagen, daß die ausgangsseitige Verbindung der Verdampfungsvorrichtung zur Ansaugluftführung wärmeisoliert ist, um ein Kondensieren der Brennstoffdämpfe zu vermeiden.

Weiterhin ist es von Vorteil, wenn die Verdampfungsvorrichtung ausgangsseitig über ein Kurbelgehäuseentlüftungsrohr der Brennkraftmaschine mit dem Schmierölsystem und der Ansaugluftführung verbunden ist.

Zur weiteren Erläuterung wird auf das in der Zeichnung dargestellte Ausführungsbeispiel der Erfindung verwiesen. Es zeigen:

Figur 1   eine schematische Frontansicht einer Hubkolbenbrennkraftmaschine, die mit einer erfindungsgemäßen Verdampfungsvorrichtung ausgerüstet ist;

Figur 2 einen Längsschnitt durch eine Verdampfungsvorrichtung, die an der Abgasführung der Hubkolbenbrennkraftmaschine angebracht ist.

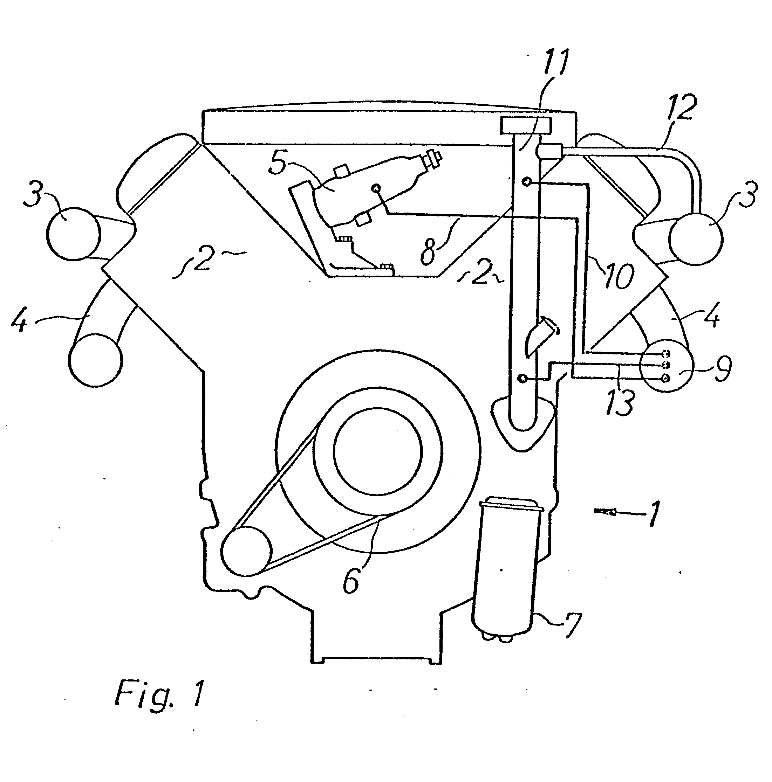

In Fig. 1 ist in einer schematischen Frontansicht eine Hubkolbenbrennkraftmaschine 1 dargestellt, bei der die Zylinderreihen 2 V-förmig angeordnet sind und die funktionsgemäß für die Zylinderreihen 2 jeweils eine Ansaugluftführung 3 und eine Abgasführung 4 aufweist und ferner mit einer Einspritzpumpe 5, einem Hilfsantrieb 6 und einem Ölfilter 7 versehen ist. Über die Einspritzpumpe 5 wird ein niedrig siedender Brennstoff, insbesondere Methanol, gefördert, wobei weitere, nicht näher dargestellte Merkmale für den Betrieb der Hubkolbenbrennkraftmaschine 1 mit einem niedrig siedenden Brennstoff, z. B. eine Zündstrahleinspritzvorrichtung oder ein Zünd- bzw. Glühkörper, vorgesehen sein können. Die Einspritzpumpe 5 ist zur Schmierung — nicht im Einzelnen dargestellt — an das Schmierölsystem der Hubkolbenbrennkraftmaschine 1 angeschlossen, so daß aufgrund von unvermeidbaren Leckagen in der Einspritzpumpe 5 die Gefahr besteht, daß niedrig siedender Brennstoff in das Schmierölsystem der Hubkolbenbrennkraftmaschine 1 gelangt. Deshalb ist im Schmierölrücklauf 8 der Einspritzpumpe 5 eine Verdampfungsvorrichtung vorgesehen, die unter anderem aus einem Verdampferraum 9 besteht. Die Verdampfungsvorrichtung wird mit Abgas der Hubkolbenbrennkraftmaschine beheizt und ist direkt an einer Abgasführung 4 der Hubkolbenbrennkraftmaschine 1 vorgesehen. Das mit niedrig siedendem Brennstoff verunreinigte Schmieröl der Einspritzpumpe 5 wird über den Schmierölrücklauf 8 der Verdampfungsvorrichtung zugeführt, in der die niedrig siedenden Brennstoffbestandteile in Dampfform abgeschieden werden. Die Brennstoffdämpfe werden über eine Leitung 10 dem Kurbelgehäuseentlüftungsrohr 11 der Hubkolbenbrennkraftmaschine 1 zugeführt und gelangen über eine Leitung 12 zur Ansaugluftführung 3, durch die sie der weiteren Verbrennung zugeleitet werden. Die Leitung 12 und ggfs. die Leitung 8 und das Kurbelgehäuseentlüftungsrohr 11 können wärmeisoliert sein, um ein Kondensieren der Brennstoffdämpfe mit Sicherheit auszuschließen. Das in der Verdampfungsvorrichtung vollständig von niedrig siedendem Brennstoff gereinigte Schmieröl gelangt über einen Ölrücklauf 13 und das Kurbelgehäuseentlüftungsrohr 11 in das Schmierölsystem der Hubkolbenbrennkraftmaschine 1 zurück.

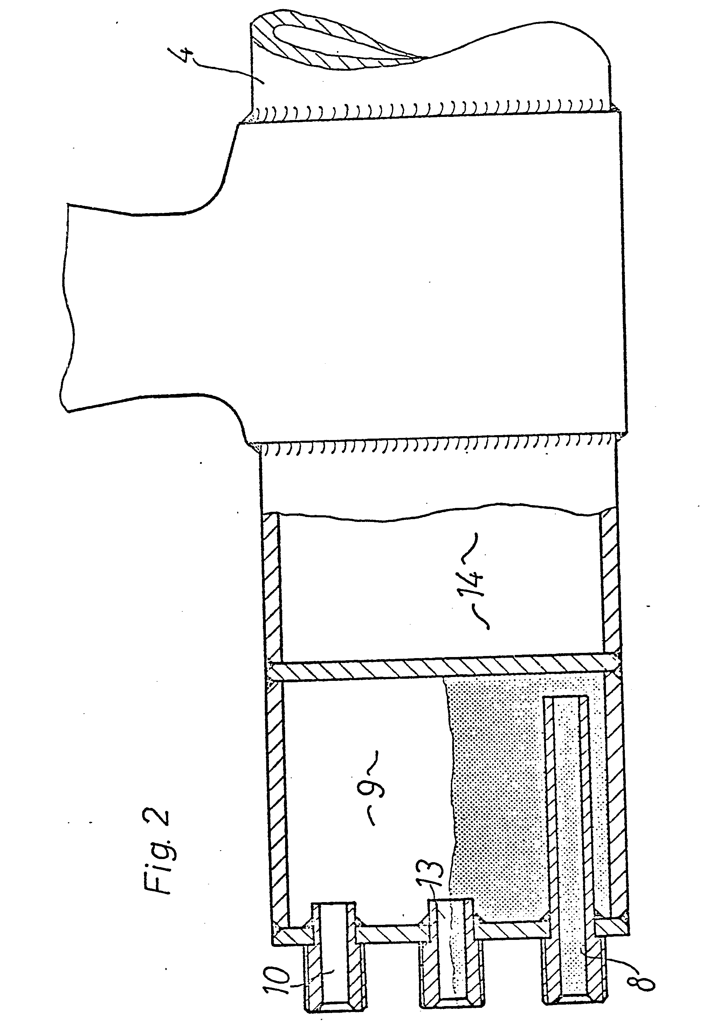

Fig. 2 zeigt einen Längsschnitt durch die Verdampfungsvorrichtung, die an einer Abgasführung 4 der Hubkolbenbrennkraftmaschine thermisch angekoppelt ist. Die Verdampfungsvorrichtung ist der Geometrie der Abgasführung 4 angepaßt und mit der Abgasführung 4 einstückig ausgebildet und besteht aus einem Verdampferraum 9 und einem abgeschlossenen Luftraum 14, wobei der Luftraum 14 zwischen Abgasführung 4 und dem Verdampferraum 9 angeordnet ist und dessen Luftraumvolumen bezüglich der Wärmeübertragung entsprechend der zulässigen Schmieröltemperaturen und der notwendigen Verdampfungstemperaturen optimiert ist. Diese Bauweise ist fertigungstechnisch einfach zu realisieren, da eine vorhandene Abgasführung in vorteilhafter Weise nur um zwei Räume, z. B. durch Schweißen, verlängert werden muß. Aufgrund des runden Querschnittes der Verdampfungsvorrichtung, bestehend aus dem Verdampferraum 9 und dem Luftraum 14, wobei beide denselben Durchmesser wie die Abgasführung 4 aufweisen, ist in diesem Ausführungsbeispiel zweckmäßigerweise der Ölrücklauf 13 in der Querschnittsmitte des Verdampferraumes 9 vorgesehen, um eine maximale Verdampfungsoberfläche zu erhalten.

**Patentansprüche**

1. Hubkolbenbrennkraftmaschine (1) mit einer Ansaugluftführung (3) und einer Abgasführung (4) und mit einer zumindest eine Einspritzpumpe (5) und eine Einspritzdüse aufweisenden Brennstoffeinspritzvorrichtung, wobei zur Schmierung der Einspritzpumpe (5) der Brennkraftmaschine Schmieröl entnehmbar und über einen Schmierölrücklauf (8) in das Schmierölsystem der Brennkraftmaschine rückführbar ist, gekennzeichnet durch eine Verdampfungsvorrichtung, die eingangsseitig mit dem Schmierölrücklauf (8) der Einspritzpumpe (5) und ausgangsseitig mit dem Schmierölsystem der Brennkraftmaschine und der Ansaugluftführung verbunden ist, wobei die Verdampfungsvorrichtung an der Abgasführung (4) thermisch angekoppelt ist und einen Verdampferraum (9) aufweist, in den ein Zu- und Abfluß für das Motorschmieröl sowie eine Ausgangsleitung für die verdampften Stoffe mündet, wobei der Verdampferraum (9) durch einen geschlossenen Luftraum (14) von der Abgasführung (4) getrennt ist.

2. Hubkolbenbrennkraftmaschine nach Anspruch 1, dadurch gekennzeichnet, daß die Abgasführung (4) und die Verdampfungvorrichtung einstückig ausgebildet sind.

3. Hubkolbenbrennkraftmaschine nach Anspruch 1 oder 2, dadurch gekennzeichnet, daß der Verdampferraum (9) und der Luftraum (14) zylinderförmig ausgebildet sind und denselben Durchmesser aufweisen wie die Abgasführung (4).

4. Hubkolbenbrennkraftmaschine nach einem der Ansprüche 1 bis 3, dadurch gekennzeichnet, daß die ausgangsseitige Verbindung der Verdampfungsvorrichtung zur Ansaugluftführung (3) wärmeisoliert ist.

5. Hubkolbenbrennkraftmaschine nach einem der Ansprüche 1 bis 4, dadurch gekennzeichnet, daß die Verdampfungsvorrichtung ausgangsseitig über ein Kurbelgehäuseentlüftungsrohr (11) der Brennkraftmaschine (1) mit dem Schmierölsystem und der Ansaugluftführung (3) verbunden ist.

## Claims

1. A reciprocating-piston internal combustion engine (1) having an air-intake duct (3), and exhaust duct (4) and fuel-injection equipment comprising at least one injection pump (5) and one injection nozzle, in which lubricating oil for lubricating the injection pump (5) is withdrawable from the internal combustion engine's lubricating system and returnable thereto *via* a lubricating oil return pipe (8), characterized by an evaporator the inlet of which is connected to the lubricating oil return pipe (8) of the injection pump (5) and the outlets of which are connected to the engine's lubricating system and to the air-intake duct, in which the evaporator which is thermally coupled to the exhaust duct (4) comprises an evaporation chamber (9) provided with respective terminals for the inflow and outflow of the engine's lubricating oil and for a duct for the discharge of the evaporated substances, and in which the evaporation chamber (9) is separated from the exhaust duct (4) by a sealed air chamber (14).

2. A reciprocating-piston internal combustion engine according to claim 1, characterized in that the exhaust duct (4) and the evaporator form an integral unit.

3. A reciprocating-piston internal combustion engine according to claim 1 or claim 2, characterized in that the evaporation chamber (9) and the air chamber (14) are cylindrically shaped, the diameter of each being the same as that of the exhaust duct (4).

4. A reciprocating-piston internal combustion engine according to any of the claims 1 to 3, characterized in that the duct or ducts connecting the evaporator's outlet to the air-intake duct (3) is heat-insulated.

5. A reciprocating-piston internal combustion engine according to any of the claims 1 to 4, characterized in that the evaporator's outlets are connected *via* a crankcase breather pipe (11) of the engine of the latter's lubricating system and to the air-intake duct (3) respectively.

## Revendications

1. Moteur à combustion interne à pistons (1) comportant une arrivée d'air d'aspiration (3) et une évacuation de gaz d'échappement (4) ainsi qu'un dispositif d'injection de carburant comportant au moins une pompe à injection (5) et une buse d'injection, le graissage de la pompe à injection (5) du moteur à combustion interne étant assuré par de l'huile de graissage et cette huile revenant dans le système d'huile de graissage du moteur à combustion interne par un retour d'huile de graissage (8), caractérisé par un dispositif de vaporisation dont l'entrée est reliée au retour d'huile (8) de la pompe à injection (5) et dont la sortie est reliée au système d'huile de graissage du moteur à combustion interne et au moyen d'alimentation en air aspiré, le dispositif de vaporisation étant couplé thermiquement à l'évacuation des gaz d'échappement (4) et comporte une chambre de vaporisation (9), chambre dans laquelle débouche une arrivée et une évacuation d'huile de graissage ainsi qu'une conduite de sortie pour les matières à vaporiser, la chambre de vaporisation (9) étant séparée de l'évacuation des gaz d'échappement (4) par une chambre d'air (14) fermée.

2. Moteur à combustion interne à pistons selon la revendication 1, caractérisé en ce que l'évacuation de gaz d'échappement (4) et le dispositif de vaporisation sont réalisés en une seule pièce.

3. Moteur à combustion interne à pistons selon la revendication 1 ou 2, caractérisé en ce que la chambre de vaporisation (9) et la chambre d'air (14) sont de forme cylindrique et ont le même diamètre que l'évacuation des gaz d'échappement (4).

4. Moteur à combustion interne à pistons selon l'une des revendications 1 à 3, caractérisé en ce que la liaison extérieure du dispositif de vaporisation allant vers l'alimentation en air aspiré (3) est isolée thermiquement.

5. Moteur à combustion interne à piston, selon l'une des revendications 1 à 4, caractérisé en ce que le dispositif de vaporisation est relié en sortie au système d'huile de graissage par l'intermédiaire du tuyau de mise à l'air (11) du carter de vilebrequin du moteur à combustion interne ainsi qu'à l'arrivée d'air d'aspiration (3).

Fig. 1

Fig. 2

0 106 950